# EUROPÄISCHE PATENTANMELDUNG

(11) **EP 2 492 649 A1**
(43) Veröffentlichungstag der Anmeldung: **29.08.2012**
(21) Anmeldenummer: 12000312.4
(22) Anmeldetag: 19.01.2012
(51) Int. Cl.: G01F 1/684, G01F 1/692

(54) **Strömungssensor mit Stromdurchführung durch den Gehäusedeckel sowie Sensorspitze als Zwischenprodukt**

(30) Priorität: 28.01.2011 DE 102011009754
(71) Anmelder: Heraeus Sensor Technology GmbH, 63450 Hanau (DE)
(72) Erfinder: Muziol, Matthias, 63533 Mainhausen (DE); Wienand, Karlheinz, Dr., 63741 Aschaffenburg (DE)
(74) Vertreter: Kühn, Hans-Christian

(57) **Zusammenfassung**

Zur einfachen reproduzierbaren Massenproduktion von Anemometern fürAGR, für bis zu 200°C oder 300°C heiße Abgasströme werden Leiter und Schichtwiderstände auf ein Bett, z.B. ein keramisches Profil, gelegt und auf diesem Bett zugedeckt, z.B. durch auftragen und einbrennen von Glaspaste.

Bei dieser Massenproduktion von Strömungssensoren, insbesondere Heißfilmanemometern, deren Sensorspitze bis an den Gehäusedeckel aus anorganischen Materialien besteht, beispielsweise Oxiden wie Aluminiumoxid, Magnesiumoxid oder Spinell, führt man erfindungsgemäß ein Kabel in ein Gehäuse und selbsttragende elektrische Leiter durch den Gehäusedeckel. In dem Gehäuse verbindet man Adern des Kabels mit den selbsttragenden elektrischen Leitern, und schließt danach das Gehäuse mit dem Gehäusedeckel. Mit durch den Deckel führenden Bettprofilen werden die Schichtwiderstände vom Gehäuse so weit beabstandet, dass Schichtwiderstände und Gehäuse thermisch weitgehend entkoppelt sind, um die Messgenauigkeit nicht zu beeinträchtigen. Vorzugsweise sind die Schichtwiderstände mit Anschlussdrähten ausgestattet.

Als Zwischenprodukt wird eine Messspitze oder ein Sensorstab als Teil einer Sensorspitze aus rein anorganischen Komponenten geschaffen, um die Massenproduktion zu rationalisieren.

## Beschreibung

Die vorliegende Erfindung betrifft Heißfilmanemometer zur AGR. Ein Heißfilmanemometer ermittelt über den Energieverbrauch einer auf einem Substrat angeordneten Widerstandsschicht in einem Massenstrom z.B. Abgasstrom die Masse des Massenstroms.

Zur genaueren Steuerung einer Abgasrückführung (AGR) werden zwei thermisch voneinander entkoppelte Widerstände in den Abgasstrom geführt und dieser Strömungssensor hierzu an einem Abgaskanal befestigt. In und am Abgaskanal sind die Strömungssensoren Temperaturen zwischen 200 °C und 300 °C ausgesetzt. Für diesen Bereich wird eine Sensorspitze aus anorganischen Materialien bereitgestellt.

Ein Anemometer weist zwei thermisch voneinander entkoppelte Heizwiderstände oder gemäß EP 1151188 einen Heizwiderstand und einen Messwiderstand auf.

Zur Selbstreinigung eines Strömungssensorelements bei dem ein Temperaturmesselement und ein Heizelement auf einem Trägerelement angeordnet sind, wird gemäß DE 10 2005 051182 das Temperaturmesselement mit einem zusätzlichen Platindünnfilmwiderstand geheizt.

DE 10 2006 030786 , WO 2007 048573 und WO 2008 000494 offenbaren Strömungssensoren, bei denen elektrische Kabel in ein Metallrohr führen, das mit einem Deckel geschlossen wird, in den Schichtwiderstände gesteckt werden.

Bei einer Anordnung eines Schichtwiderstands in einem Abgasrohr oder Abgasrückführrohr ist nach WO 2008 131890 der Schichtwiderstand in einem Träger befestigt, der gegen eine Abschirmung (4a) oder ein Gehäuse (4b) abgedichtet ist, die oder das dicht mit dem Abgasrohr oder Abgasrückführrohr verbunden ist, und dadurch gekennzeichnet, dass der Träger (3) und die Abschirmung oder das Gehäuse radial außerhalb des Abgasrohrs oder Abgasrückführrohrs von diesem beabstandet gegeneinander abgedichtet sind. DE 102008037206 (A1) offenbart eine anemometrische Messeinrichtung in einem Abgasrückführrohr, bei der ein keramischer Träger, auf dem Schichtwiderstände befestigt sind, in einem Spritzgussgehäuse aus Kunststoff eingebettet ist, wobei die elektrische Verbindung durch den Spritzguss hindurchgeführt wird, innerhalb des Spritzgussteils abgedichtet und befestigt wird.

Die Aufgabe der vorliegenden Erfindung ist eine einfache reproduzierbare Massenproduktion von Anemometern für AGR, die in bis zu 200°C, insbesondere bis zu 300°C heiße Abgasströme eintauchen.

Zur Lösung der Aufgabe werden elektrische Leiter und Schichtwiderstände auf ein Bett z.B. ein keramisches Profil gelegt und auf diesem Bett zugedeckt, z.B. durch auftragen und einbrennen von Glaspaste.

Dies geschieht bedeutend rationeller als Schichtwiderstände mit ihren dünnen Anschlussdrähten aus Platin in den Deckel zu stecken.

Die Lösungen der Aufgabe werden mit den Merkmalen der unabhängigen Ansprüche beschrieben. In den abhängigen Ansprüchen sind bevorzugte Ausführungen beschrieben.

Zur Massenproduktion von Strömungssensoren, insbesondere Heißfilmanemometern, deren Sensorspitze bis an den Gehäusedeckel aus anorganischen Materialien besteht, beispielsweise Oxiden wie Aluminiumoxid, Magnesiumoxid oder Spinell, führt man erfindungsgemäß ein Kabel in ein Gehäuse und selbsttragende elektrische Leiter durch den Gehäusedeckel. In dem Gehäuse verbindet man Adern des Kabels mit den selbsttragenden elektrischen Leitern, und schließt danach das Gehäuse mit dem Gehäusedeckel. Mit den durch den Deckel führenden Bettprofilen werden die Schichtwiderstände vom Gehäuse so weit beabstandet, dass Schichtwiderstände und Gehäuse thermisch weitgehend entkoppelt sind, um die Messgenauigkeit nicht zu beeinträchtigen. dabei sind die Schichtwiderstände vorzugsweise mit Anschlussdrähten ausgestattet. Die elektrischen Leiter sind leichter an Anschlussdrähte anschließbar als an Kontaktflächen des Schichtwiderstands.

Erfindungsgemäß wird ermöglicht, rationell Schichtwiderstände an elektrische Leiter auf einer Trage oder einem Bett anzuschließen und die elektrischen Leiter auf dieser Trage oder diesem Bett liegend abzudecken.

Damit wird auch eine Sensorspitze oder ein Sensorstab als Teil einer Sensorspitze bereitgestellt. Das Bett ist zunächst eine Auflage für die elektrischen Leiter und wird zum Träger der darauf eingebetteten elektrischen Leiter und darauf befestigten Schichtwiderstände. Profile, insbesondere keramische Profile haben sich als Bett bewährt. Einbrennen von Glaspaste oder Glaskeramikpaste hat sich zum Einbetten bewährt. Beim Einbrennen verflüchtigen sich organische Komponenten, insbesondere der Paste, so dass ein Sensorstab oder eine Sensorspitze aus rein anorganischen Komponenten geschaffen wird. Bei einer bevorzugten Sensorspitze werden die elektrischen Leiter des Sensorstabs durch einen Deckel geführt. Zwischen dem Deckel und dem Schichtwiderstand werden die elektrischen Leiter auf dem Bett luftdicht abgedichtet. Diese Abdichtung schützt die elektrischen Leiter vor Korrosion durch Umgebungsluft.

Das Bett als Träger der Schichtwiderstände sieht zusammen mit den darauf befestigten und an einem Ende hinausragenden Anschlussdrähten der Schichtwiderstände und den eingebetteten und am anderen Ende darüber hinausragenden elektrischen Leitern ähnlich einer Trage zum Krankentransport in Miniaturisierung aus.

Die Sensorspitze aus anorganischen Materialien enthält mindestens einen Heizwiderstand, der mit selbsttragenden elektrischen Leitern verbunden ist, die durch einen Gehäusedeckel führen. Die selbsttragenden Leiter überbrücken im Gehäuse zwischen dem Bett und der Kontaktierung an den Kontakten, an denen weiter hinten die Adern eines Anschlusskabels angeschlossen sind, eine Strecke ohne Träger. Die selbsttragenden Leiter behalten aufgrund ihres großen Querschnitts ihre Position während der Produktion und den Vibrationsbelastungen im Betrieb. Die Sensorspitze einschließlich ein als Schichtwiderstand ausgebildeter Heizwiderstand, die mit diesem Heizwiderstand verbundenen selbsttragenden elektrischen Leiter und der oder die Träger auf dem oder denen man die selbsttragenden elektrischen Leiter fixiert, wiedersteht aufgrund der anorganischen Materialien den Heizleistungen des Heizwiderstandes in 300°C heißen Gasströmen.

Wenn man die Deckel bis zu 300°C heißen Gasströmen aussetzt, werden sie wegen der zusätzlichen Heizleistung der Sensoren aus anorganischem Material wie Keramik geschaffen. Diese sind zwar aufwendiger als 200°C heißen Gasströmen widerstehende Kunststoffdeckel, verschleißen dafür aber nicht so schnell bei genauen Messungen der Masse von 300°C heißen Gasströmen, insbesondere Abgasen .Deshalb bewährten sich für die Messung der Strömung von über 200°C heißen Gasen Deckel aus anorganischem Material, insbesondere keramische Deckel.

Einfache Deckel sind scheibenförmig. Bevorzugte Deckel sind teller- oder hutförmig mit einem ringförmigen Rand ausgebildet.

Das Gehäuse mit dem Deckel hält man mit einem Flansch zusammen. Zwischen Gehäuse und Deckel werden zwei Dichtungen angeordnet, um das Gehäuse gegen die Umgebung und den Gasstrom abzudichten.

Zur Sicherung der Leiter und deren Verbindung mit den Adern presst man zwei Querbolzen mit einer Abschrägung voran von der Seite zwischen Einzeladern und einer Querbohrung. Damit wirken sich Zugkräfte am Kabel nicht auf die Verbindung der Adern mit den Kontakten, die die Zugkräfte wiederum auf die von den selbsttragenden elektrischen Leitern trägerfrei überbrückte Strecke innerhalb des Gehäuses weiterleiten würden aus, und somit auch nicht weiter auf die Einbettung bis zu den feinen Anschlussdrähten des Schichtwiderstands.

Die Leiter sind Drähte oder Streifen aus Nickel, Nickellegierung, Stahl, insbesondere Edelstahl. Streifen können platzsparend auch hochkant nebeneinander angeordnet werden und ermöglichen eine Maximierung der auf einem Bett nebeneinander in Reihe aufstellbaren Leiter. Die Anschlussdrähte der Schichtwiderstände bestehen aus Platin oder weisen einen Platinmantel insbesondere um einen Nickelkern auf. Schichtwiderstände umfassen verschiedene Platindünnschichtwiderstände insbesondere je Sensor zwei Heizleiter und Temperaturfühler.

Die selbsttragenden elektrischen Leiter verbindet man außerhalb des Gehäuses mit Schichtwiderständen. Zwischen den Schichtwiderständen und der Durchführung durch den Deckel deckt man die elektrischen Leiter auf einem Bett zu.

Man deckt die selbsttragenden elektrischen Leiter im Bereich zwischen einem Schichtwiderstand und einer Deckeldurchführung vollständig ab. Die Leiter ragen dann aus dem Gehäuse direkt auf das Bett auf dem sie zugedeckt sind. Am anderen Ende des Betts sind sie an den Schichtwiderstand oder die Schichtwiderstände angeschlossen.

Eine Massenproduktion von Sensorspitzen als Zwischenprodukt rationalisiert den gesamten Prozess zur Sensorherstellung. Da alle Teile der Sensorspitze aus anorganischen Materialien bestehen, brauchen Hitzebehandlungen keine Schutzvorkehrungen für die hitzeempfindlichen Bestandteile des Sensors, da diese separat von der Spitze verarbeitet werden. So wird als Heizwiderstand gefahrlos für hitzeempfindliches Material ein Schichtwiderstand mit den selbsttragenden elektrischen Leitern verbunden, die durch einen Gehäusedeckel geführt werden. Erfindungsgemäß werden die selbsttragenden elektrischen Leiter im Bereich zwischen einem Schichtwiderstand, an den sie angeschlossen werden und einer Deckeldurchführung durch die sie ragen nachdem sie durch den Gehäusedeckel geführt wurden, auf einem Bett zugedeckt.

Dies ermöglicht die Verwendung vorgefertigter Sensorspitzen zur Massenproduktion von Strömungssensoren, insbesondere Heißfilmanemometern, bei denen in einem Gehäuse Adern eines Kabels mit selbsttragenden elektrischen Leitern verbunden werden, das Kabel aus dem Gehäuse führt und die selbsttragenden elektrischen Leiter durch einen Deckel des Gehäuses geführt werden.

Dabei werden erfindungsgemäß die selbsttragenden elektrischen Leiter außerhalb dieses Gehäuses mit Schichtwiderständen verbunden und zwischen den Schichtwiderständen und der Durchführung durch den Deckel auf einem Bett zugedeckt.

Der Strömungssensor, insbesondere dessen Spitze dient zur Steuerung einer AGR. bei der ein Heizwiderstand ein Schichtwiderstand ist, zu dessen Kontaktierung in einem Gehäuse Adern eines Kabels mit selbsttragenden elektrischen Leitern verbunden sind, das Kabel aus dem Gehäuse führt und die selbsttragenden elektrischen Leiter durch einen Deckel des Gehäuses führen. Da die selbsttragenden elektrischen Leiter im Bereich zwischen einem Schichtwiderstand, an den sie angeschlossen sind und einer Deckeldurchführung durch die sie aus dem Gehäuse ragen, auf einem Bett zugedeckt sind, sind sie vor den schädlichen Abgasen geschützt, die an der Sensorspitze vorbeiströmen. Die Spitze schützt wiederum die wärmeempfindlichen Teile des Sensors vor der Hitze des Abgases und der Heizleistung des oder der Heizer in der Sensorspitze.

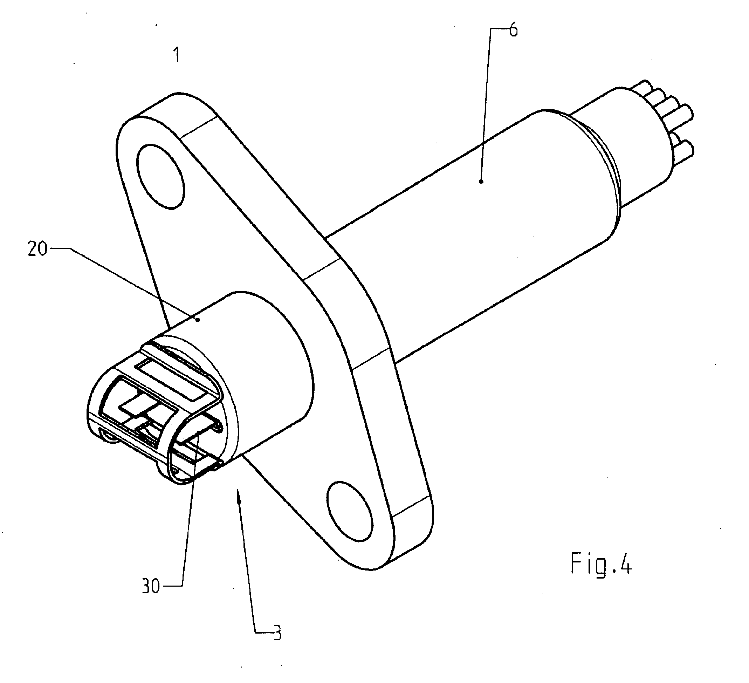

Im Folgenden wird die Erfindung mit Bezug auf Figuren 1- 4 verdeutlicht.
- Fig. 1: zeigt einen Strömungssensor im Schnitt
- Fig. 2: zeigt ein Flussdiagramm zur Herstellung einer Sensorspitze
- Fig.3: zeigt ein Flussdiagramm zur Befestigung des Kabels im Gehäuse
- Fig. 4: zeigt einen Strömungssensor in dreidimensionaler Darstellung

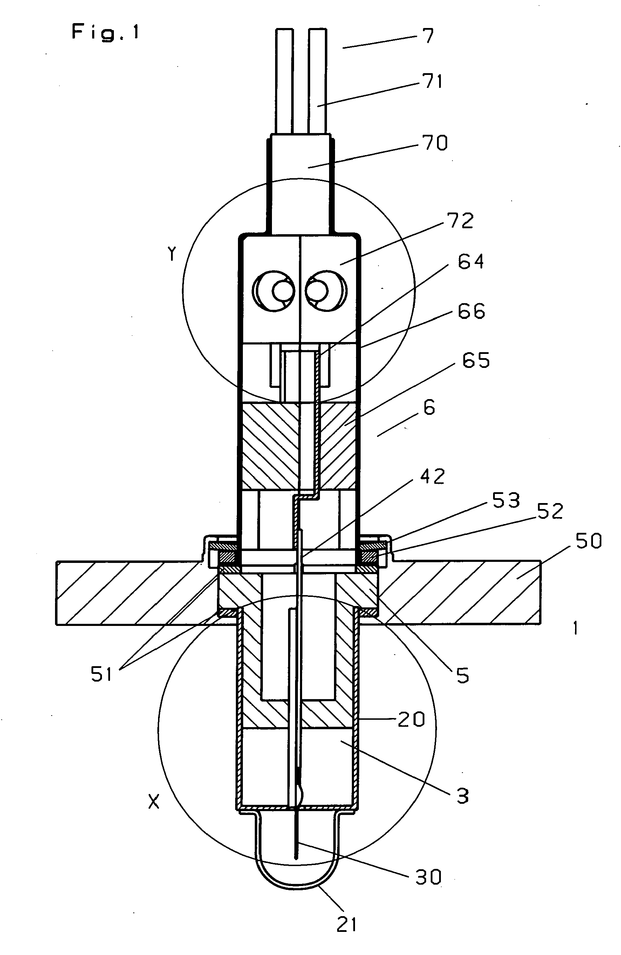

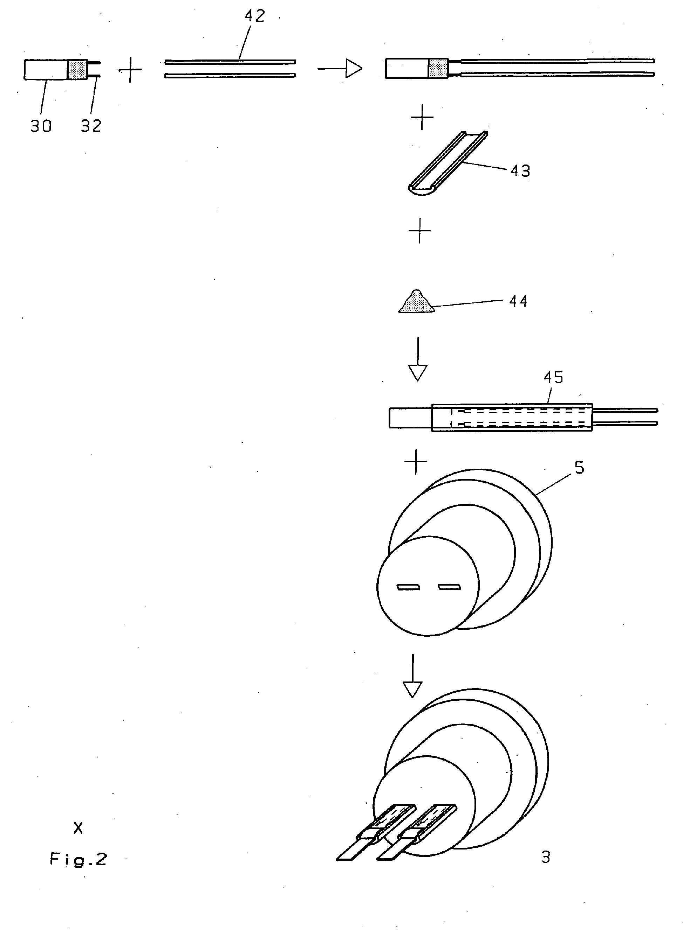

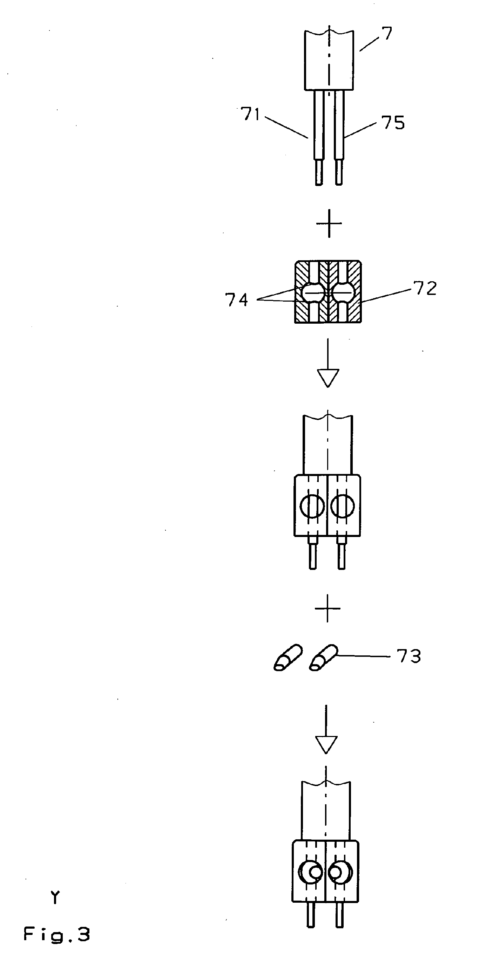

Fig. 1 zeigt einen Sensor mit einer Sensorspitze 3 nach Fig. 2 und einer in Fig. 3 abgebildeten Kabelbefestigung.

Die Sensorspitze 3 wird gemäß Fig. 2 zusammengesetzt. Hierzu wird ein Schichtwiderstand 30 an seinen Anschlussdrähten elektrisch mit selbsttragenden Leitern 42, z.B. Nickelstreifen oder Edelstahlstreifen verbunden. Bewährte Anschlussdrähte 32 der Schichtwiderstände 30 aus Platin oder mit Platinmantel werden kurz und dünn ausgeführt, um den Platinverbrauch gering zu halten. Die Mindestlänge wird durch die rationelle Verarbeitbarkeit vorgegeben und der minimale Durchmesser durch die mechanische Festigkeit. Der Einfluss der Anschlussdrähte 32 auf die Messung vergrößert sich mit deren Widerstand, so dass diese auch deshalb möglichst kurz ausgeführt werden. Die Verlängerung der dünnen Schichtwiderstandsdrähte mit stärkeren Leitern insbesondere aus Edelstahl sorgt für einen geringen Leitungswiderstand auch über größere Entfernungen und eine stabile Positionierung der Leiter 42 im weiteren Verbau.

Die Leiter 42 am Schichtwiderstand werden dann auf ein Bettungsprofil 43 gelegt und dicht mit Glasmasse 44 fixiert. Hierzu trägt man Glaspaste auf dem Bett 43 so auf, dass die Leiter 42 abgedeckt sind. Das Bettungsprofil 43 ist ein Träger auf dem die Leiter 42 fixiert werden, ein Profil der Stabilität wegen und hat damit einhergehend die Funktion eines Betts 43.Man brennt die aufgetragene Glaspaste bei so hoher Temperatur, dass sich nach dem Brennvorgang die Leiter beim Abkühlen von der sie umgebenden Fixierungsmassewegen ihres größeren Ausdehnungskoeffizienten lösen. Dabei entsteht ein Spalt zwischen Leitern und deren Einbettung 44, der beim Gebrauch des Sensors vor Materialermüdung aufgrund der unterschiedlichen Ausdehnungskoeffizienten von Leitern und Isolation bewahrt.

Ein oder zwei auf diese Weise hergestellte Sensorstäbe 45 werden in einen Gehäusedeckel 5 eingesetzt. So wird eine Messspitze 3 bereitgestellt, die leicht vorgefertigt werden kann. Der Sensor kann deshalb in Massenproduktion in einem finalen Schritt durch Befestigung der Sensorspitze auf dessen Gehäuse sehr rationell hergestellt werden.

Hierzu wird die Messspitze 3 gemäß Fig. 1 mit zwei Dichtungen 51 in den Flansch 50 eingesetzt. Die Komplettierung des äußeren Gehäuses 6 erfolgt mit der Hülse 66. Die Hülse 66 hat einen Rand, der auf der oberen Dichtung 51 liegt. Der Rand wird über einen Druckring 52 und eine darauf wirkende Tellerfeder 53 auf die Dichtung gepresst, indem der Rand des Flansches 50 umgebördelt wird.

Das Gehäuse 6 wird kabelseitig abgedichtet, indem ein Anschlusskabel 7 in ein Rohr, insbesondere eine tiefgezogene Metallhülse 66 eingeführt wird. Die Hülse 66 stellt den hinteren Teil des Gehäuses zwischen dem Flansch und dem Anschlusskabel dar. Das Anschlusskabel 7 dichtet dabei über eine Kabeltülle 70 das Gehäuse 6 in dem kabelseitigen Abschnitt der Hülse 66 ab. Die mechanische Fixierung des Kabels erfolgt über die Zugentlastung 72.

Das Anschlusskabel 70 wird elektrisch mit den Kontakten 64 verbunden, die in dem Isolator 65 aus Kunststoff mechanisch fest und elektrisch zueinander isoliert umspritzt sind. Zur Sensorspitze hin sind wiederum die selbsttragenden Leiter 42 mit den Kontakten 64 kontaktiert.

Um die Sensoren vor mechanischer Beschädigung zu schützen, ist die Schutzkappe 20 mit dem Schutzbügel 21 an dem Flansch 50 verschweißt.

Nach Fig. 3 werden auf der zur Sensorspitze 3 entgegengesetzten Seite des Gehäuses 6 die Adern 71 in Längsbohrungen der im Gehäuse 6 angeordneten Zugentlastung 72 eingeschoben. Zwei Querbolzen 73 werden mit einer Abschrägung voran von der Seite quer zur Ader 71 in den Zwischenraum zwischen Einzelader 71 und Querbohrung gepresst. Dadurch legt sich die Einzelader 71 in eine Zugentlastungsschleife und die Einzeladerisolierung 75 wird zusätzlich durch scharfe Kanten 74 aufgrund der Kreuzung von Längs- und Querbohrungen eingekerbt und somit formschlüssig gegen Zug und Verdrehen festgehalten. Damit einhergehend sichert diese Art der Zugentlastung die Einzeladern 71 auf kleinstem Raum gegen Verdrillen und Herausziehen. Durch nebeneinanderlegen mehrerer Adern 71 in Bohrungen können mit einem entsprechend längeren Bolzen Mehrfachzugentlastungen realisiert werden. Diese Miniaturisierung bei hoher Stabilität ermöglicht eine rationelle Massenproduktion. Maßgeblich hierfür ist die hohe Ordnung durch nebeneinander liegende Adern 71, die es erlaubt sogar 3 bis 12, insbesondere 4 bis 10 Adern 71 einfach und rationell in einem Schritt mit einer Zugentlastung zu versehen.

Die linke und die rechte Ader 71 in Fig. 3 stehen vorzugsweise für in jeweils einer Reihe hintereinander angeordnete Aderreihen beispielsweise aus jeweils 3 oder 4 Adern.

### Bezugszeichenliste

- 1: Strömungssensor
- 20: Schutzkappe
- 21: Schutzbügel
- 3: Messspitze aus anorganischem Material
- 30: Schichtwiderstand
- 32: Anschlussdrähte insbesondere aus Pt
- 42: Leiter, insb. Leiterrahmen
- 43: Bett oder Trage
- 44: Fixierungsmittel, insb. Glas
- 45: Sensorstäbe
- 5: Deckel
- 50: Flansch
- 51: Dichtung
- 52: Druckring
- 53: Tellerfeder
- 6: Gehäuse
- 64: Kontakte
- 65: Isolator
- 66: Hülse
- 7: Kabel
- 70: Kabeltülle
- 71: Adern
- 72: Zugentlastung
- 73: Querbolzen
- 74: Kanten
- 75: Einzeladerisolierung

## Patentansprüche

1. Verfahren zur Massenproduktion von Strömungssensoren (1), insbesondere Heißfilmanemometern, deren Sensorspitze (3) - einschließlich ein als Schichtwiderstand (30) ausgebildeter Heizwiderstand, mit diesem Heizwiderstand verbundene selbsttragende elektrische Leiter (42) und Träger auf dem oder denen die selbsttragenden elektrischen Leiter (42) fixiert werden - bis an den Gehäusedeckel (5) aus anorganischen Materialien besteht, **dadurch gekennzeichnet, dass** ein Kabel (7) in ein Gehäuse (6) führt und die selbsttragenden elektrischen Leiter (42) durch einen Gehäusedeckel (5) führen, in dem Gehäuse (6) Adern (71) des Kabels (7) mit den selbsttragenden elektrischen Leitern (42) verbunden werden, und danach das Gehäuse (6) mit dem Gehäusedeckel (5) geschlossen wird.

2. Verfahren nach Anspruch 1, **dadurch gekennzeichnet, dass** ein Bolzen (73) mit einer Einführschräge voran quer zu einer Ader in einen Zwischenraum zwischen der Ader und einer Querbohrung gepresst wird.

3. Verfahren nach Anspruch 1 oder 2, **dadurch gekennzeichnet, dass** das Gehäuse (6) mit dem Deckel (5) mit einem Flansch (50) zusammengehalten wird.

4. Verfahren nach einem der Ansprüche 1 bis 3, **dadurch gekennzeichnet, dass** die selbsttragenden elektrischen Leiter (42) außerhalb des Gehäuses (6) mit Schichtwiderständen (30) verbunden werden und zwischen den Schichtwiderständen (30) und der Durchführung durch den Deckel (5) auf einem Bett (43) abgedeckt werden.

5. Sensorspitze (3) aus anorganischen Materialien, bei der ein Heizwiderstand ein Schichtwiderstand ist, der mit selbsttragenden elektrischen Leitern (42) verbunden ist, die durch einen Gehäusedeckel (5) führen, **dadurch gekennzeichnet, dass** die selbsttragenden elektrischen Leiter (42) im Bereich zwischen einem Schichtwiderstand (30), an den sie angeschlossen sind und einer Deckeldurchführung durch die sie aus dem Gehäuse (6) ragen, auf einem Bett (43) abgedeckt sind.

6. Verfahren zur Massenproduktion von Sensorspitzen, deren Teile aus anorganischen Materialien bestehen wobei als Heizwiderstand ein Schichtwiderstand angewendet wird, der mit selbsttragenden elektrischen Leitern (42) verbunden wird, die durch einen Gehäusedeckel (5) geführt werden, **dadurch gekennzeichnet, dass** die selbsttragenden elektrischen Leiter im Bereich zwischen einem Schichtwiderstand (30), an den sie angeschlossen werden und einer Deckeldurchführung durch die sie ragen nachdem sie durch den Gehäusedeckel (5) geführt wurden, auf einem Bett (43) abgedeckt werden.

7. Verwendung von Sensorspitzen (3) nach Anspruch 5 oder hergestellt nach Anspruch 6 zur Massenproduktion von Strömungssensoren, bei denen in einem Gehäuse (6) Adern (71) eines Kabels (7) mit selbsttragenden elektrischen Leitern (42) verbunden werden, das Kabel (7) aus dem Gehäuse (6) führt und die selbsttragenden elektrischen Leiter (42) durch einen Deckel (5) des Gehäuses geführt werden, **dadurch gekennzeichnet, dass** die selbsttragenden elektrischen Leiter (42) außerhalb dieses Gehäuses (6) mit Schichtwiderständen (30) verbunden werden und zwischen den Schichtwiderständen (30) und der Durchführung durch den Deckel (5) auf einem Bett (43) abgedeckt werden.

8. Strömungssensor (1) für eine Abgasrückführung bei dem ein Heizwiderstand ein Schichtwiderstand (30) ist, zu dessen Kontaktierung in einem Gehäuse (6) Adern eines Kabels (7) mit selbsttragenden elektrischen Leitern (42) verbunden sind, das Kabel (7) aus dem Gehäuse (6) führt und die selbsttragenden elektrischen Leiter (42) durch einen Deckel (5) des Gehäuses (6) führen, **dadurch gekennzeichnet, dass** die selbsttragenden elektrischen Leiter (42) im Bereich zwischen einem Schichtwiderstand (30), an den sie angeschlossen sind und einer Deckeldurchführung durch die sie aus dem Gehäuse (6) ragen, auf einem Bett (43) abgedeckt sind.

9. Strömungssensor (1) nach Anspruch 8, **dadurch gekennzeichnet, dass** die durch den Deckel führenden Leiter (42) mit Anschlussdrähten (32) der Schichtwiderstände (30) verbunden sind.
